# EUROPEAN PATENT APPLICATION

(11) **EP 4 737 182 A1**
(43) Date of publication of application: **06.05.2026**
(21) Application number: 25194309.8
(22) Date of filing: 06.08.2025
(51) Int. Cl.: B60K 35/81

(54) **DISPLAY CONFIGURED TO DISPLAY VARIOUS INFORMATION AND METHOD OF CONTROLLING THE DISPLAY**

(30) Priority: 04.11.2024 KR 20240154255
(71) Applicant: Hyundai Mobis Co., Ltd., Gangnam-gu Seoul 06141 (KR)
(72) Inventor: LEE, Hyun Seong, 16891 Yongin-si, Gyeonggi-do (KR)
(74) Representative: Jung, Minkyu

(57) **Abstract**

A display device configured to output various information includes a display facing an outside of a vehicle and configured to output a sign corresponding to at least one of various pieces of information and a processor configured to output the sign or transmit, receive, or process an authentication request or an authentication result for the at least one of the various pieces of information, in which the processor is further configured to transmit the authentication request for the at least one of the various pieces of information related to an owner, a driver, or an occupant of the vehicle to an authentication server or an authentication application, receive the authentication result, and output the sign according to the received authentication result.

## Description

### BACKGROUND

### Technical Field

The present disclosure relates to a display configured to display various information or a method of controlling the display, and more particularly, to an extrinsic display in a vehicle and a method of controlling the display.

### Discussion of the Related Art

A permit sign to park in a handicapped parking zone (handicapped parking sign) is issued to provide parking convenience to handicapped persons or those with difficulty moving. By attaching or placing this sign on a vehicle, the vehicle is distinguished from general vehicles and the right to park in a designated handicapped parking zone is given.

The vehicle with the sign attached may park in a parking zone reserved for the handicapped, and vehicles without the sign, parking in such a parking zone, may be subject to penalties such as fines. To prevent misuse, this sign is only valid when the handicapped or a guardian rides along.

However, in many cases, it is impossible to determine whether persons are handicapped based on their appearances alone, and by abusing this point, a handicapped parking sign is sometimes exploited illegally. This situation may lead to distrust of handicapped parking signs among other drivers and vehicle owners who are not handicapped.

As conventional handicapped parking signs are provided in the form of paper or paper coated with a plastic material, they are susceptible to breakage and damage and have problems with readability.

Meanwhile, there is a need for vehicle owners to display information on the exterior of their vehicles, as well as the handicapped parking signs. For example, there may be a system to display contact information of an owner or driver of a vehicle in the case of temporary parking, to indicate that the driver is elderly or young, or to display other systems in each country or society that are considerate of drivers or occupants.

Therefore, a means for displaying or printing handicapped parking signs and other necessary information on the exterior of a vehicle is proposed.

### SUMMARY

The present disclosure aims to provide a display configured to display various information or a method of controlling the display.

The problem of the present disclosure is not limited to those mentioned above. Other problems not described above may be understood by those of ordinary skill in the art from the description of the present disclosure below.

According to an aspect of the present disclosure, provided herein is a display device configured to output various information, the display device including a display facing an outside of a vehicle and configured to output a sign corresponding to at least one of various pieces of information and a processor configured to output the sign or transmit, receive, or process an authentication request or an authentication result for the at least one of the various pieces of information, in which the processor is further configured to transmit the authentication request for the at least one of the various pieces of information related to an owner, a driver, or an occupant of the vehicle to an authentication server or an authentication application, receive the authentication result, and output the sign according to the received authentication result.

Additionally or alternatively, the display may be attached to or integrated into any one of a windshield, a rear window, or a side window of the vehicle or installed on a front fascia or a rear end or rear surface of the vehicle.

Additionally or alternatively, the processor may be further configured to output the sign on the display upon approval of the authentication request.

Additionally or alternatively, the processor may be further configured to set the display to a first display mode and output the sign on the display, upon approval of the authentication request.

Additionally or alternatively, the first display mode may include a mode in which the display is controlled to output the sign during driving of the vehicle.

Additionally or alternatively, the display may include a display attached to or integrated with a rear window of the vehicle, and the processor may be configured to output the sign on the display according to the first display mode.

Additionally or alternatively, the processor may be further configured to check a driving state of the vehicle and further control the display according to the driving state.

Additionally or alternatively, the processor may be configured to control the display in a first display mode during driving or stop of the vehicle and control the display in a second display mode during parking of the vehicle.

Additionally or alternatively, the processor may be further configured to set the display to a third display mode upon rejection or non-approval of the authentication request.

Additionally or alternatively, the third display mode may include a mode in which the display is turned off.

Additionally or alternatively, the authentication application may be configured to obtain authentication information with respect to an owner, a driver, or an occupant of the vehicle from the authentication server and process the authentication request by using the obtained authentication information.

According to another aspect of the present disclosure, provided herein is a method of controlling a display device configured to output various information, in which the method is performed by the display device including a display facing an outside of a vehicle and configured to output a sign corresponding to at least one of various pieces of information and a processor configured to output the sign or transmit, receive, or process an authentication request or an authentication result for the at least one of the various pieces of information, the method including transmitting the authentication request for the at least one of the various pieces of information related to an owner, a driver, or an occupant of the vehicle to an authentication server or an authentication application, receiving the authentication result, and outputting the sign according to the received authentication result.

The above-described solutions of the present disclosure are a part of embodiments of the present disclosure. In addition to the solutions to the above-described problem, various solutions may be derived and understood based on the detailed description of the present disclosure described below.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is a block diagram of an autonomous vehicle to which an autonomous device is applicable;
FIG. 2 is a diagram showing an example of an autonomous device being applied to a vehicle;
FIG. 3 illustrates a display device facing an outside of a vehicle and configured to display authenticated information or various information according to the present disclosure;
FIG. 4 illustrates another example of a display device facing an outside of a vehicle and configured to display authenticated information or various information according to the present disclosure;
FIG. 5 illustrates an example of a sign of various information that may be provided in a display device according to the present disclosure;
FIG. 6 is a flowchart of a method of controlling a display device according to the present disclosure;
FIG. 7 is a flowchart of a method of controlling a display device according to the present disclosure; and
FIG. 8 is a block diagram of a display device according to the present disclosure.

The accompanying drawings, which are included to provide a further understanding of the disclosure and are incorporated in and constitute a part of this application, illustrate embodiment(s) of the disclosure and together with the description serve to explain the principle of the disclosure. In the drawings:

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger", "driver", "user", etc. are mentioned for description of the present disclosure, and may be used interchangeably therewith.

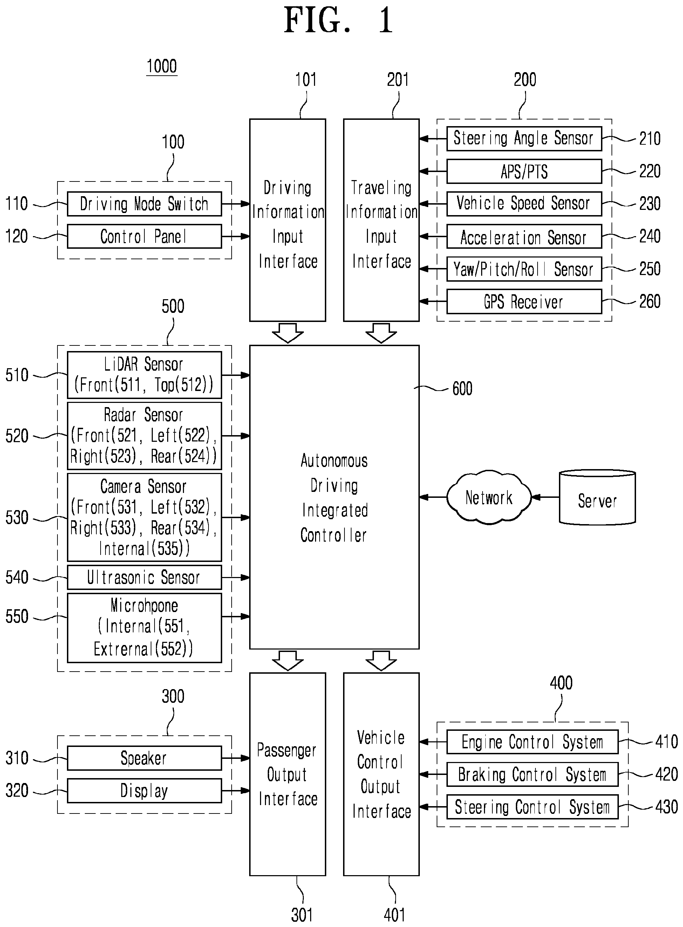

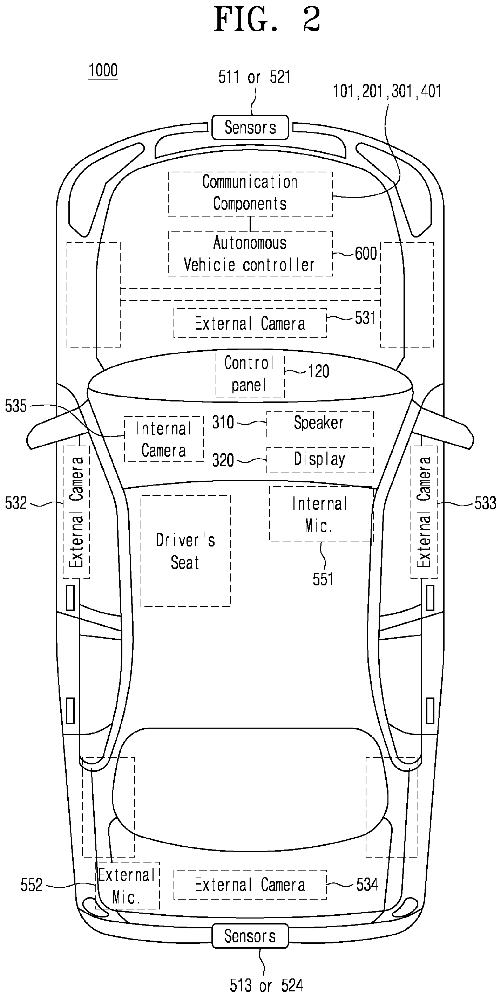

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

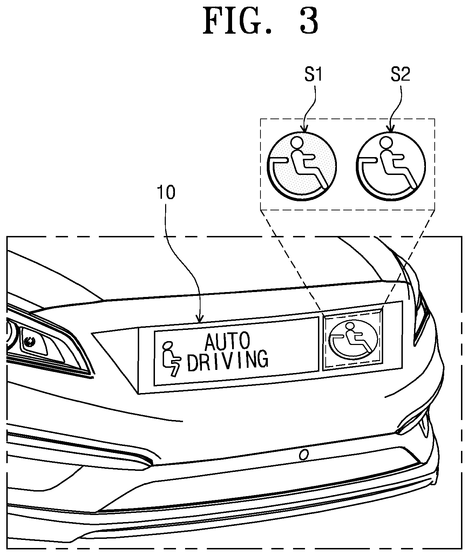

FIG. 3 illustrates a display device facing an outside of a vehicle and configured to display authenticated information or various information according to the present disclosure.

As is shown, a display device 10 may be installed on a front fascia of the vehicle.

The display device 10 may be configured to display at least one of various pieces of information, and may be configured to display a handicapped parking sign, e.g., S1 or S2. S1 may be a sign indicating a vehicle driven by a handicapped person, and S2 may be a sign indicating a vehicle driven by a guardian of the handicapped person.

The display device 10 may include a display capable of displaying visual information at all times. Thus, when the vehicle is parked or driving, the display may be configured to output a sign corresponding to at least one of various pieces of information.

The display may include a liquid crystal display (LCD), an organic light-emitting diode display (OLED), a micro LED display, a holographic display, or a transparent display displayed on a vehicle's glass.

As such, when the sign indicating various information is output through the display, the sign may be output in the same state at all times, brightness may be adjusted according to external brightness, and visibility may be improved. Additionally, compared to an existing sign printed and displayed on paper, plastic, etc., the risk of damage, breakage, and loss may be reduced.

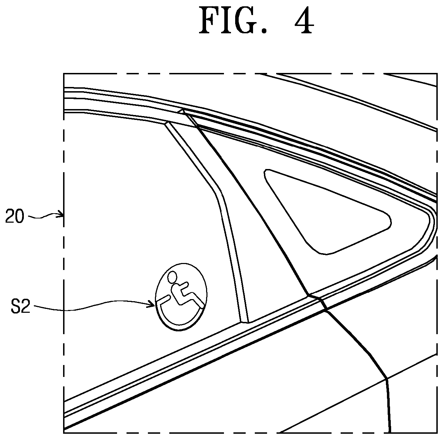

FIG. 4 illustrates another example of a display device facing an outside of a vehicle and configured to display authenticated information or various information according to the present disclosure.

A display device 20 may include a display of a type attached to or integrated with a vehicle window. For example, the display device 20 may include a transparent display.

The display device 20 may be configured to display at least one of various pieces of information, and may be configured to display a handicapped parking sign, e.g., S1 or S2. S1 may be a sign indicating a vehicle driven by a handicapped person, and S2 may be a sign indicating a vehicle driven by a guardian of the handicapped person.

The display device 20 may be configured to output a sign together with, or separately from or independently of, the display device 10 shown in FIG. 3.

As such, when the sign indicating various information is output through the display, the sign may be output in the same state at all times, brightness may be adjusted according to external brightness, and visibility may be improved. Additionally, compared to an existing sign printed and displayed on paper, plastic, etc., the risk of damage, breakage, and loss may be reduced.

In addition, display devices may be installed or included in at least two positions, rather than just one position, in the vehicle, in which case the vehicle's sign may be easily recognized from outside the vehicle.

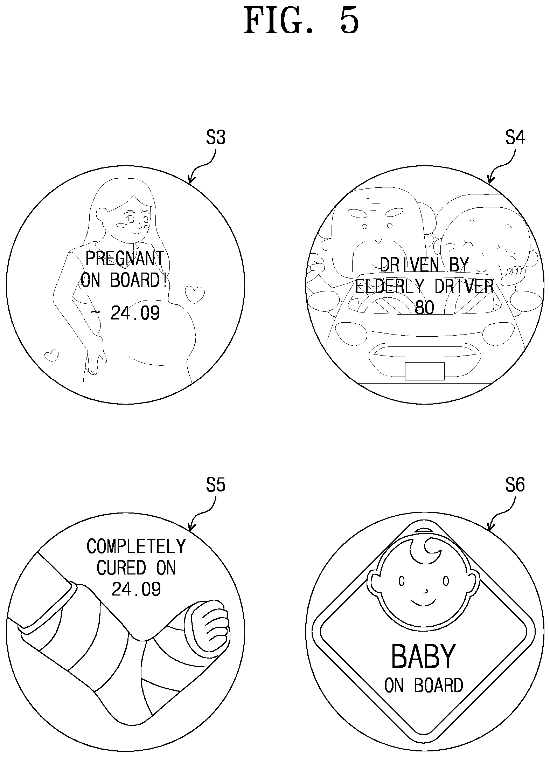

FIG. 5 illustrates an example of a sign of various information that may be provided in a display device according to the present disclosure.

A sign S3 may include a sign indicating that a pregnant woman is on board. A sign S4 may include a sign indicating that the vehicle is being driven by an elderly driver. A sign S5 may include a sign indicating a patient with reduced mobility is on board. A sign S6 may include a sign indicating that an infant is on board.

The sign may include a parking sign, such as a sign indicating that a vehicle is permitted to park in a given parking lot or parking zone.

In addition to the handicapped parking sign, various information may be output through the display device. The sign may include a sign indicating contact information of an owner or driver of the vehicle, such that when the owner or driver exits the vehicle and there is a problem with the vehicle (e.g., a vehicle fire, a fender bender, etc.), a person in the vicinity of the vehicle may contact the owner or driver of the vehicle.

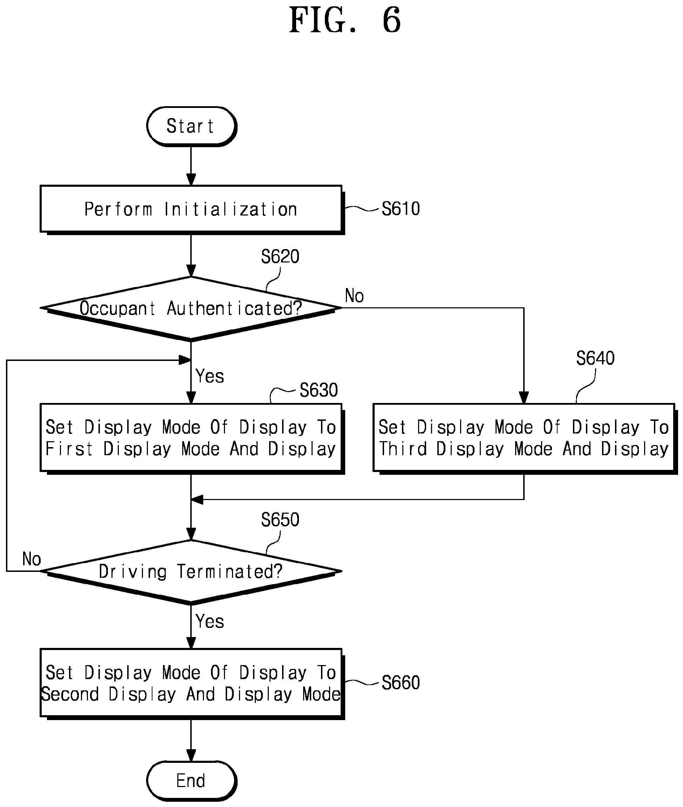

FIG. 6 is a flowchart of a method of controlling a display device according to the present disclosure. The method of FIG. 6 may be performed by the display device 10 or 20 or a processor thereof. For simplicity of a description, the following description will be made on the assumption that the device 10 performs or executes the method.

The device 10 may be configured to perform initialization for the method according to the present disclosure, in operation S610. Initialization may be triggered by the vehicle ignition being turned ON or by a key being turned ON.

The device 10 may be configured to perform authentication on an occupant, in operation S620. Authentication on the occupant may mean verifying that the occupant of the vehicle is granted a qualification or a right indicated by the sign.

The authentication may be performed via an authentication server or an authentication application. In case that the qualification or right is granted by the government, the local government, etc., the above authentication server may include a public authentication server (operated or managed by the government or local government, etc.). In case that the qualification or right is granted by an entity other than the government or local government, the authentication server may include a private authentication server (run or managed by a parking lot manager).

Accordingly, the authentication may include a procedure of transmitting a verification request for the occupant's qualification or right to the authentication server via the authentication application and receiving a response to the verification request (approval or non-approval/rejection, etc.).

Alternatively, the authentication may include a procedure of directly transmitting, by the device 10, the verification request for the occupant's qualification or right to the authentication server and receiving the response to the verification request (approval or non-approval/rejection, etc.).

Upon successful completion (i.e., approval) of occupant authentication, the device 10 may set a display mode of the display to a first display mode, in operation S630. The device 10 may output a sign on the display according to the first display mode, in operation S630.

Upon a failure (i.e., non-approval or rejection) of occupant authentication, the device 10 may set the display mode of the display to a third display mode, in operation S640. The device 10 may output the sign on the display according to the third display mode, in operation S640.

Meanwhile, the third display mode may be a mode in which the display is powered off. The third display mode may be configured not to output the sign to the display.

The occupant authentication may include verification of time information regarding the right or qualification of the occupant. That is, the right or qualification may have a fixed period of use, and a period of use may be reviewed upon receipt of an authentication request or a verification request. When it is determined that the present time is within the period of use, validity of time for the authentication request or the verification request may be identified.

Alternatively, the authentication may be configured such that the authentication application previously obtains authentication information with respect to occupant information, and upon receipt of the authentication request or the verification request, the authentication application processes the received authentication request or verification request using the obtained authentication information. The previously obtained authentication information may be information obtained from the authentication server (e.g., administrative information of the government or local government, such as handicapped registration information, etc.) or occupant-related information obtained in advance from the occupant (e.g., biometric information, etc.). In this case, the device 10 may be configured to download and store authorized information for an owner A of the vehicle from the authentication server in the authentication application, perform authentication of the biometric information (e.g., fingerprint information) of the owner A of the vehicle through the authentication application, and output a sign corresponding to the authorized information on the display when the owner A is authenticated through the biometric information. That is, the authentication server and the authentication application may be linked to each other. The authentication application may be software, logic, etc., installed on the device 10 or in the vehicle, and may be connected to communicate with the authentication server. The period of use, as described above, may also be downloaded and stored in a memory of the device 10 or in the authentication application, through the authentication application.

The device 10 may determine whether the driving of the vehicle is terminated, in operation S650. Upon termination of the driving of the vehicle, the device 10 may set the display mode of the display to a second display mode, in operation S660. The device 10 may output the sign on the display according to the second display mode, in operation S630.

The first display mode and the second display mode may be set to output at least one of the brightness or resolution of the display, or the size of the sign differently.

Additionally or alternatively, the first display mode and the second display mode may have different positions of the display outputting the signs or may have different configurations or combinations of the display. That is, this case may be applied when the device 10 has a plurality of displays. The first display mode may be configured to output the sign on a first display, while the second display mode may be configured to output the sign on a second display. This is merely an example, and the first display mode may be configured to output the sign on at least one display that is different from that of the second display mode, and vice versa.

As such, the present disclosure may output or not output the corresponding sign depending on whether the occupant of the vehicle is authenticated.

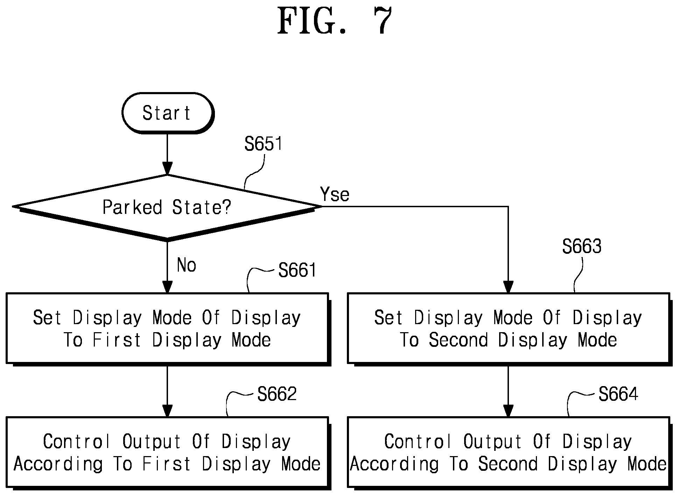

FIG. 7 is a flowchart of a method of controlling a display device according to the present disclosure. The method of FIG. 7 may be performed by the display device 10 or 20 or a processor thereof. For simplicity of a description, the following description will be made on the assumption that the display device 10 performs or executes the method.

The method of FIG. 7 may be a modified example of S650, S660 and S630 of FIG. 6. However, the method of FIG. 7 may be independently performed, regardless of FIG. 6.

The device 10 may identify a driving state of the vehicle, in operation S651. To this end, the device 10 may use various sensors such as a vehicle speed sensor, an acceleration sensor, a yaw/pitch/roll sensor, a global positioning system (GPS) receiver, etc. More specifically, the device 10 may determine whether the vehicle is in a parked state, in operation S651.

The device 10 may set the display mode of the display to the first display mode when it is determined that the vehicle is not in the parked state, in operation S661. The device 10 may control the output of the display according to the first display mode, in operation S662. That is, while the vehicle is driving, the device 10 may control the output of the display in the first display mode. At this time, the first display mode may include a mode for outputting a sign approved through an authentication procedure on the display.

The device 10 may set the display mode of the display to the second display mode when it is determined that the vehicle is in the parked state, in operation S663. The device 10 may control the output of the display according to the second display mode, in operation S664. That is, while the vehicle is driving, the device 10 may control the output of the display in the second display mode. At this time, the second display mode may include a mode for outputting a sign approved through an authentication procedure on the display. However, the second display mode may be different from the first display mode in terms of the brightness or resolution of the display, or size of the sign to be output, or, in case that there are a plurality of displays, at least some of the displays on which the sign is output may be different.

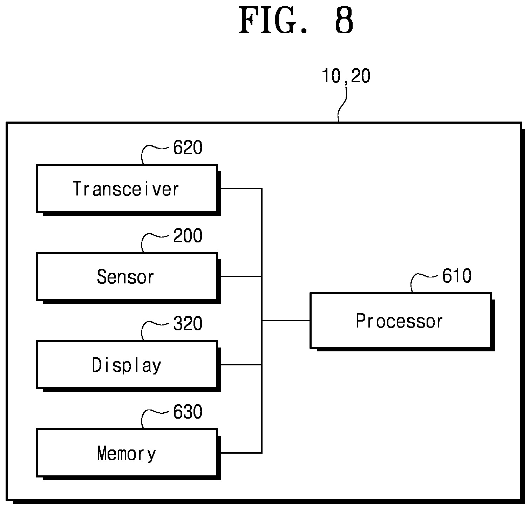

FIG. 8 is a block diagram of a display device according to the present disclosure.

The device 10 or 20 may be configured to output various information.

The device 10 or 20 may include a display 320 facing the outside of the vehicle and configured to output a sign corresponding to at least one of various pieces of information.

The device 10 or 20 may include a processor 610 configured to output a sign, transmit, receive, or process an authentication request or authentication result for at least one of various pieces of information.

The processor 610 may be configured to transmit the authentication request for the at least one of various pieces of information related to an owner, driver, or occupant of the vehicle to the authentication server or the authentication application. The processor 610 may also be configured to receive the authentication result for the authentication request. The processor 610 may be configured to output the sign corresponding to the at least one of various pieces of information according to the received authentication result.

A display 320 may be attached to or integrated with any one of a windshield, a rear window, or a side window of the vehicle. Alternatively, the display 320 may include a display installed in a front fascia of the vehicle or the rear end or rear surface of the vehicle.

The processor 610 may be configured to output the sign to the display 320 as the authentication request is approved. Alternatively, upon approval of the authentication request, the processor 610 may be configured to set the display 320 to the first display mode and output the sign on the display 320.

The first display mode may include a mode in which the display 320 is controlled to output the sign during the driving of the vehicle. The display 320 may include a display attached to or integrated with the rear window of the vehicle, and the processor 610 may be configured to output the sign on the display 320 according to the first display mode.

The processor 610 may be configured to identify the driving state of the vehicle and further control the display 320 according to the driving state. The processor 610 may be configured to control the display 320 in the first display mode during driving or stop of the vehicle and control the display 320 in the second display mode during parking of the vehicle.

The display 320 that outputs the sign in the first display mode and the display 320 that outputs the sign in the second display mode may be set differently. Thus, the sign may be output on the display 320 on the rear surface, rear end, or rear window side of the vehicle during driving or stop of the vehicle, and the sign may be output on the display 320 on the front fascia side of the vehicle during parking of the vehicle.

During parking of the vehicle, the display that outputs the sign may be different depending on a parking direction. That is, in the case of front parking (i.e., when the front of the vehicle faces the inside of a parking zone), the sign may be output on the display 320 on the rear surface, the rear end, or the rear window side of the vehicle, and in the case of rear parking (i.e., when the rear of the vehicle faces the inside of the parking zone), the sign may be output on the display 320 on the front fascia or windshield side of the vehicle.

The processor 610 may be configured to set the display 320 to the third display mode when the authentication request is rejected or not approved. The third display mode may include a mode in which the display 320 is turned off.

The authentication application may be configured to obtain authentication information with respect to the owner, driver, or occupant of the vehicle from the authentication server and process the authentication request using the obtained authentication information. The authentication application may be executed by the processor 610.

The device 10 or 20 may include a transceiver 620 configured to receive a sign corresponding to various information. The transceiver 620 may be used to transmit and receive the authentication request or the authentication result.

The device 10 or 20 may include a sensor 200 configured to detect a driving state. The sensor 200 may include a vehicle speed sensor, an acceleration sensor, a yaw/pitch/roll sensor, a GPS receiver, etc.

The device 10 or 20 may include a memory (630) configured to store the authentication information, the sign, or information received from the authentication server.

Meanwhile, components, operations, logic, etc., related to FIGS. 3 to 7 that are not described with reference to FIG. 8 may be performed by the display device 10 or the processor 610 thereof.

Meanwhile, according to another embodiment of the present disclosure, a vehicle 1000 including the above-described device 10 or 20 may be proposed.

The present disclosure has the following effects.

The present disclosure may provide a means for outputting various information, including authenticated information, to a user on a display of a vehicle.

The present disclosure may obtain trust from the public, including a user, by authenticating information remotely and in real time and displaying the authenticated information on the display.

Moreover, the present disclosure may eliminate inconvenience or risk of damage or loss by displaying the authenticated information on the display.

The effects of the present disclosure are not limited to those mentioned above. Other effects not described above may be understood by those of ordinary skill in the art from the description of the present disclosure below.

In the foregoing specification, it is described that a "device" for controlling the display device or each component included therein performs control, but the "device", "system" and components included therein are merely names and the scope of rights is not dependent on them.

That is, the proposed technology may be performed by other names than a device, a processor, or a controller, and in addition, the method, scheme, etc., described above may be performed by software for controlling the display or the display device or a code readable by a computer, other machines, devices, etc.

## Claims

1. A display device configured to output various information, the display device comprising:
a display facing an outside of a vehicle and configured to output a sign corresponding to at least one of various pieces of information; and
a processor configured to output the sign or transmit, receive, or process an authentication request or an authentication result for the at least one of the various pieces of information,
wherein the processor is further configured to:
transmit the authentication request for the at least one of the various pieces of information related to an owner, a driver, or an occupant of the vehicle to an authentication server or an authentication application;
receive the authentication result; and
control the display to output the sign according to the received authentication result.

2. The display device of claim 1, wherein the display is attached to or integrated into any one of a windshield, a rear window, or a side window of the vehicle or installed on a front fascia or a rear end or rear surface of the vehicle.

3. The display device of claim 1 or 2, wherein the processor is further configured to control the display to output the sign upon approval of the authentication request.

4. The display device of any one of claims 1 to 3, wherein the processor is further configured to set the display to a first display mode and control the display to output the sign, upon approval of the authentication request.

5. The display device of claim 4, wherein the first display mode comprises a mode in which the display is controlled to output the sign during driving of the vehicle.

6. The display device of claim 4 or 5, wherein the display comprises a display attached to or integrated with a rear window of the vehicle, and
the processor is configured to control the display to output the sign according to the first display mode.

7. The display device of any one of claims 1 to 6, wherein the processor is further configured to:
check a driving state of the vehicle; and
further control the display according to the driving state.

8. The display device of claim 7, wherein the processor is further configured to:
control the display in a first display mode during driving or stop of the vehicle; and
control the display in a second display mode during parking of the vehicle.

9. The display device of any one of claims 1 to 8, wherein the processor is configured to set the display to a third display mode upon rejection or non-approval of the authentication request.

10. The display device of claim 9, wherein the third display mode comprises a mode in which the display is turned off.

11. The display device of any one of claims 1 to 10, wherein the authentication application is configured to obtain authentication information with respect to an owner, a driver, or an occupant of the vehicle from the authentication server and process the authentication request by using the obtained authentication information.

12. A method of controlling a display device configured to output various information, wherein
the method is performed by the display device comprising a display facing an outside of a vehicle and configured to output a sign corresponding to at least one of various pieces of information and a processor configured to output the sign or transmit, receive, or process an authentication request or an authentication result for the at least one of the various pieces of information, the method comprising:
transmitting the authentication request for the at least one of the various pieces of information related to an owner, a driver, or an occupant of the vehicle to an authentication server or an authentication application;
receiving the authentication result; and
controlling the display to output the sign according to the received authentication result.

13. The method of claim 12, wherein the display is attached to or integrated into any one of a windshield, a rear window, or a side window of the vehicle or installed on a front fascia or a rear end or rear surface of the vehicle.

14. The method of claim 12 or 13, further comprising: controlling the display to output the sign upon approval of the authentication request.

15. The method of any one of claims 12 to 14, further comprising: setting the display to a first display mode and controlling the display to output the sign, upon approval of the authentication request.
